# EUROPÄISCHE PATENTANMELDUNG

(11) **EP 4 002 755 A1**
(43) Veröffentlichungstag der Anmeldung: **25.05.2022**
(21) Anmeldenummer: 20207904.2
(22) Anmeldetag: 16.11.2020
(51) Int. Cl.: H04L 9/32, G06F 21/33, H04L 29/06, G05B 19/406

(54) **DYNAMISCHES ZERTIFIKATSMANAGEMENT ZUR LAUFZEIT EINER TECHNISCHEN ANLAGE**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird ein Leitsystem (1) für eine technische Anlage, insbesondere eine Fertigungs- oder Prozessanlage, welches wenigstens einen Operator Station Server (3) umfasst. Das Leitsystem (1) ist dadurch gekennzeichnet, dass auf dem Operator Station Server (3) ein Zertifikatsdienst (16) implementiert ist, welcher dazu ausgebildet ist, Änderungen einer Automatisierungskonfiguration der technischen Anlage zur Laufzeit der technischen Anlage zu erfassen, und welcher dazu ausgebildet ist, mittels der erfassten Änderungen zu prüfen, ob innerhalb der technischen Anlage neue Zertifikate beantragt, bestehende Zertifikate geändert und/oder bestehende Zertifikate revoziert werden müssen.

## Beschreibung

Die Erfindung betrifft ein Leitsystem für eine technische Anlage, insbesondere eine Fertigungs- oder Prozessanlage. Außerdem betrifft die Erfindung ein Verfahren zum Verwalten von Zertifikaten einer technischen Anlage mittels eines Leitsystems. Zudem betrifft die Erfindung die Verwendung eines Leitsystems zum Betrieb einer technischen Anlage.

Eine Registrierungsstelle (engl. Registration Authority, kurz: RA) hat als eine zentrale Komponente einer Public Key Infrastruktur (PKI) einer Automatisierungsanlage insbesondere die Aufgabe, die Zertifikatsanträge (engl. Certificate Signing Requests, kurz: CSR) von diversen Anlagenkomponenten entgegenzunehmen und sie zu validieren. Eine solche Registrierungsstelle ist beispielsweise in der EP 3 402 152 A1 beschrieben.

Wird für das Zertifikatsmanagement der Automatisierungsanlage ein Standardprotokoll (z.B. CMP nach RFC4210) verwendet, kann es sich bei den Zertifikatsanträgen um Anträge zwecks der initialen Beantragung (Bootstrapping) oder Erneuerung (Update) handeln. Beim Bootstrapping wird der Zertifikatsantrag in der Regel mit dem Gerätezertifikat (engl. Manufacturer Device Certificate, kurz: MDC) signiert, während beim Update das zuletzt ausgestellte operative Zertifikat (engl. Operating Certificate, kurz: OC) zum Signieren verwendet wird. An dieser Stelle sei bemerkt, dass alternativ oder zusätzlich zum Gerätezertifikat, welches während der Fertigung von einer Hersteller-Zertifizierungsstelle (engl. Certification Authority, kurz: CA) ausgestellt wird, ein sogenanntes Kundenzertifikat (engl. Customer Device Certificate, kurz: CDC) verwendet werden kann, welches das Gerät nach einer entsprechenden Prüfung in der Automatisierungsanlage (des Kunden) erhalten hat.

Der Registrierungsstelle, die einen Zertifikatsantrag validiert, liegt beim Bootstrapping (d.h. dem initialen Ausrollen) eines CDC oder eines OC das entsprechende MDC oder CDC des Antragstellers und bei der Erneuerung dieses Zertifikats das für den Antragsteller zuletzt ausgestellte OC vor. In einem erstrebenswerten Ausführungsszenario beantragen die Anlagenkomponenten, die die sog. operativen Zertifikate für die Nutzung von verschiedenen sicheren Protokollen wie z.B. TLS, OPC UA benötigten, diese Zertifikate selbst. Dabei richtet eine Anlagenkomponente in der Rolle eines Clients bzw. eines Antragstellers ihren Antrag an eine Registrierungsstelle, die den Antrag validiert und an eine Zertifizierungsstelle weiterleitet. Die Zertifizierungsstelle befindet sich beispielsweise in der Anlage ("Onsite-CA") oder einem Trust Center ("Offsite-CA" oder "CA as a Service"). Dabei ist die Adresse der Registrierungsstelle (die beispielsweise bei der Nutzung von HTTP/HTTPS als Transportprotokoll zur Übertragung von Zertifikatsanträgen unter Verwendung des CMP-Protokolls durch eine URL repräsentiert wird) in der Regel in der Konfigurationsdatei der Anlagenkomponente aufgeführt. Zusätzlich können auch weitere Angaben (z.B. der Port, über den die RA angesprochen werden darf) in der Konfiguration mitberücksichtigt werden.

Es ist nicht notwendig und in bestimmten Umgebungen sogar zu unterbinden, dass Geräte einer Automatisierungsanlage miteinander kommunizieren können, wenn es durch die Projektierung der Anlage nicht vorgesehen ist. Zudem können nicht notwendige, aber offene (und somit mögliche) Kommunikationsbeziehungen die Sicherheit, die Stabilität und die Verfügbarkeit eines Leitsystems der Automatisierungsanlage unnötig einschränken.

Des Weiteren können (gemäß der aktuellen Konfiguration als nicht notwendig erweisende) Zertifikatsanträge, die von den Anlagenkomponenten durch die Registrierungsstelle an die Zertifizierungsstelle "pauschal durchgereicht" werden, zu einem unnötig erhöhten Kommunikationsaufkommen führen. Dadurch kann insbesondere die Anlagenverfügbarkeit beeinträchtigt werden. Ferner führen die unnötigerweise ausgestellten operativen Zertifikate dazu, dass die Zertifikatsspeicher der Anlagenkomponenten durch "zu viele", teilweise unnötige Zertifikate befüllt werden, was bei manchen Komponenten zu Performance-Problemen führen kann.

Der Erfindung liegt die Aufgabe zugrunde, ein Leitsystem für eine technische Anlage anzugeben, welches bei einer Konfigurationsänderung der technischen Anlage eine unmittelbare Anpassung der an Komponenten der technischen Anlage zu vergebenden Zertifikate ermöglicht.

Diese Aufgabe wird gelöst durch ein Leitsystem für eine technische Anlage, insbesondere eine Fertigungs- oder Prozessanlage, mit den Merkmalen des Anspruchs 1. Außerdem wird die Aufgabe gelöst durch ein Verfahren zum Verwalten von Zertifikaten einer technischen Anlage mittels eines Leitsystems mit den Merkmalen des Anspruchs 6. Zudem wird die Aufgabe gelöst durch eine Verwendung eines Leitsystems gemäß Anspruch 11. Vorteilhafte Weiterbildungen ergeben sich aus den abhängigen Ansprüchen.

Ein erfindungsgemäßes Leitsystem für eine technische Anlage, insbesondere eine Fertigungs- oder Prozessanlage, umfasst wenigstens einen Operator Station Server. Es ist dadurch gekennzeichnet, dass auf dem Operator Station Server ein Zertifikatsdienst implementiert ist, welcher dazu ausgebildet ist, Änderungen einer Automatisierungskonfiguration der technischen Anlage zur Laufzeit der technischen Anlage zu erfassen, und welcher dazu ausgebildet ist, mittels der erfassten geänderten Automatisierungskonfiguration zu prüfen, ob innerhalb der technischen Anlage neue Zertifikate beantragt, bestehende Zertifikate geändert und/oder bestehende Zertifikate revoziert werden müssen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems der technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Unter einer Automatisierungskonfiguration wird im vorliegenden Kontext ein Zusammenwirken von verschiedenen Anlagenkomponenten der technischen Anlage verstanden, die beispielsweise in Form einer Automatisierungskonfigurationsdatei von dem Operator Station Server erfasst (und weiter verarbeitet) werden können. In der Automatisierungskonfiguration können hierzu unter anderem Kommunikationsbeziehungen zwischen den einzelnen Anlagenkomponenten hinterlegt sein. Die Automatisierungskonfiguration dient dabei in der Regel nicht nur dem Bedienen und Beobachten der technischen Anlage auf dem Operator Station Server, sondern wird auf Anlagenkomponenten (Automatisierungsgeräte, dezentrale Peripherien, Messumformer etc.) übertragen, um deren Betrieb zu automatisieren.

Im Rahmen der vorliegenden Erfindung werden Änderungen an der Automatisierungskonfiguration zur Laufzeit der technischen Anlage von dem Zertifikatsdienst des Operator Station Servers dynamisch erkannt und hinsichtlich ihrer Relevanz für das Zertifikatsmanagement des Leitsystems der technischen Anlage überprüft. Somit kann gewährleistet werden, dass die Zertifikate auch zum operativen Stand - im Einklang mit dem Minimalitätsprinzip der Namur oder der Anforderung "Least Functionality" nach IEC 62443 - optimal passen und nicht vorab schon (beispielsweise operative) Zertifikate auf dem Operator Station Server vorhanden sind, die möglicherweise gar nicht benötigt werden. Auch lässt sich somit eine Konsistenz zwischen dem Zertifikatsbedarf und dem Ladezustand des Operator Station Servers erreichen. Durch das erfindungsgemäße Leitsystem kann effektiv verhindert werden, dass Anlagenkomponenten Zertifikate (zu diversen Verwendungszwecken) bekommen, die sie gemäß den im jeweiligen Anlagen- und Projektkontext geplanten Kommunikationsbeziehungen nicht benötigen.

Moderne Leitsysteme werden durch Modularisierung flexibel und "dynamisch" änderbar gestaltet. Nach der Projektierung von Teilanlagen, technischen Einrichtungen und modularen Anlagenteile ist es das Ziel möglichst flexible in unterschiedlichen Kombinationen unterschiedliche Produkte herstellen zu können, ohne dass hierbei ein erneutes (Re-)Engineering notwendig ist. Dies bedeutet, dass sich Konfigurationsdaten im weitesten Sinne auch zur Laufzeit ändern (müssen) - wie z.B. den Tausch von Package Units mit entsprechenden Rückwirkungen auf die Verbindungskonfiguration. Durch diese Erfindung kann bei jeglicher Konfigurationsänderung zur Laufzeit eine unmittelbare Anpassung der operativen Zertifikate aus den Konfigurationsdaten heraus angestoßen werden.

Zudem kann das erfindungsgemäße Leitsystem dazu beigetragen, das Kommunikationsaufkommen in der technischen Anlage nicht unnötig zu erhöhen. Dadurch wird insbesondere ein Beitrag zur Aufrechterhaltung des stabilen Normalbetriebs und zur optimalen Anlagenverfügbarkeit geleistet. Es kann außerdem bewirkt werden, dass die Zertifikatsspeicher der einzelnen Anlagenkomponentendurch nicht durch zu viele, teilweise unnötige Zertifikate befüllt werden, was bei manchen Komponenten zu Performance-Problemen führen kann.

Vorteilhafterweise ist der Zertifikatsdienst dazu ausgebildet, einem Bediener der technischen Anlage das Ergebnis der vorgenommenen Prüfung mittels einer Mitteilung mitzuteilen.

Alternativ oder zusätzlich kann der Zertifikatsdienst dazu ausgebildet sein, das Beantragen, Ändern und/oder Revozieren von Zertifikaten automatisiert in Reaktion auf die vorgenommene Prüfung zu initiieren.

Besonders bevorzugt ist der Zertifikatsdienst dazu ausgebildet, das Revozieren von Zertifikaten stellvertretend für die Anlagenkomponenten, deren Zertifikat revoziert werden soll, bei einer Zertifizierungsstelle der technischen Anlage zu beantragen. Dabei kann er sich einer Registrierungsstelle bedienen oder den Antrag direkt an die Zertifizierungsstelle richten.

Die Zertifizierungsstelle, die Zertifikate für Anlagenkomponenten (z.B. Endgeräte und Applikationen) ausstellt, wird auch als eine sogenannte "Issuing CA (Certification Authority)" bezeichnet. Eine derartige Issuing CA ist in der Regel stets online und stellt, basierend auf eingehenden Zertifikatsanträgen, Zertifikate für diverse Antragsteller aus, die sie mit ihrem eigenen Issuing CA Zertifikat signiert. Die Vertrauenswürdigkeit der Issuing CA wird dadurch sichergestellt, dass ihr eigenes Issuing CA Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Issuing CA ausstellen soll. Die Root CA kann sich außerhalb der technischen Anlage befinden.

Der Zertifikatsdienst kann die einzelnen Anlagenkomponenten auch direkt dazu auffordern, ihr Zertifikat revozieren zu lassen oder sich ein neues, ggf. geändertes Zertifikat zu beantragen.

Im Rahmen einer vorteilhaften Weiterbildung des Leitsystems umfasst dieses zusätzlich wenigstens einen Engineering Station Server. Dieser ist dazu ausgebildet und vorgesehen, eine geänderte Automatisierungskonfiguration der technischen Anlage zu erzeugen. Der Operator Station Server ist dabei dazu ausgebildet, die geänderte Automatisierungskonfiguration der technischen Anlage von dem Engineering Station Server zu empfangen und dem Zertifizierungsdienst zur weiteren Verarbeitung bereitzustellen. Es handelt sich dabei um eine überarbeitete, geänderte Automatisierungskonfiguration (im Vergleich zu einer früheren, dem Operator Station Server bekannten Automatisierungskonfiguration).

Ein erfindungsgemäßes Verfahren zum Verwalten von Zertifikaten einer technischen Anlage mittels eines Leitsystems, welches wenigstens einen Operator Station Server aufweist, umfasst die folgenden Schritte:
a) Ändern einer Automatisierungskonfiguration der technischen Anlage;
b) Erfassen der geänderten Automatisierungskonfiguration der technischen Anlage zur Laufzeit der technischen Anlage durch einen auf dem Operator Station Server implementierten Zertifikatsdienst;
c) Mittels der erfassten geänderten Automatisierungskonfiguration prüfen durch den Zertifikatsdienst, ob innerhalb der technischen Anlage neue Zertifikate beantragt, bestehende Zertifikate geändert und/oder bestehende Zertifikate revoziert werden müssen.

Vorteilhafterweise wird einem Bediener der technischen Anlage das Ergebnis der vorgenommenen Prüfung mittels einer Mitteilung übermittelt.

Bevorzugt initiiert der Zertifikatsdienst das Beantragen, Ändern und/oder Revozieren von Zertifikaten automatisiert in Reaktion auf die vorgenommene Prüfung.

Der Zertifikatsdienst kann das Revozieren von Zertifikaten stellvertretend für die Anlagenkomponenten, deren Zertifikat revoziert werden soll, bei einer Zertifizierungsstelle der technischen Anlage beantragen.

Besonders bevorzugt umfasst das Leitsystem zusätzlich wenigstens einen Engineering Station Server. Die Änderung der Automatisierungskonfiguration der technischen Anlage wird durch den Engineering Station Server vorgenommen, wobei der Engineering Station Server die geänderte Automatisierungskonfiguration der technischen Anlage an den Operator Station Server überträgt, welcher die geänderte Automatisierungskonfiguration der technischen Anlage von dem Engineering Station Server empfängt und dem Zertifizierungsdienst zur weiteren Verarbeitung bereitstellt.

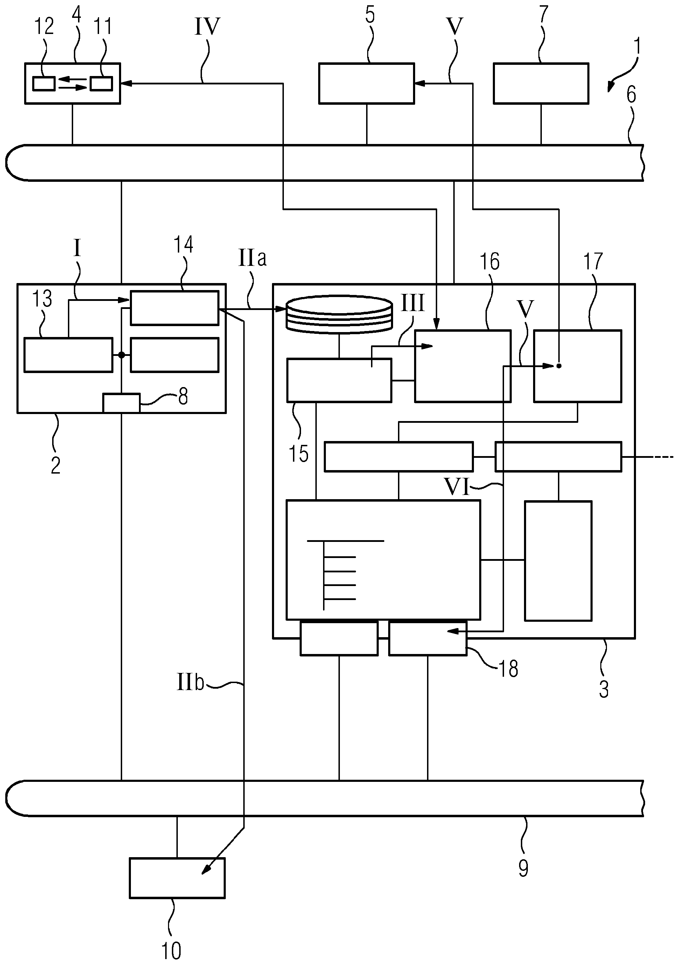

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein erfindungsgemäßes Leitsystem 1 einer als Prozessanlage ausgebildeten technischen Anlage dargestellt. Das Leitsystem 1 weist einen Engineering Station Server 2, einen Operator Station Server 3, einen Verwaltungsserver 4, einen Operator Station Client 5 und einen Engineering Station Client 7 auf.

Der Engineering Station Server 2, der Operator Station Server 3, der Verwaltungsserver 4, der Operator Station Client 5 und der Engineering Station Client 7 sind über einen Terminalbus 6 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 5 mittels des Terminalbus 6 auf den Operator Station Server 3 zugreifen. Ein Projekteur bzw. Bediener hat mittels des Engineering Station Clients 7 mittels des Terminalbus 6 im Kontext eines Engineerings / Projektierens / Konfigurierens Zugriff auf den Engineering Station Server 2. Der Terminalbus 6 kann, ohne sich darauf zu beschränken, beispielsweise als Industrial Ethernet ausgebildet sein.

Der Engineering Station Server 2 weist eine Schnittstelle 8 auf, die mit einem Anlagenbus 9 verbunden ist. Über diese Schnittstelle 8 kann der Engineering Station Server 2 mit einem in der Figur dargestellten Automatisierungsgerät 10 sowie mit optional vorhandenen weiteren Komponenten der Prozessanlage (nicht dargestellt) kommunizieren. Der Anlagenbus 9 kann, ohne sich darauf zu beschränken, beispielsweise als Industrial Ethernet ausgebildet sein. Das Automatisierungsgerät 10 kann mit einer beliebigen Anzahl an Subsystemen (nicht dargestellt) verbunden sein.

Auf dem Verwaltungsserver 4 ist eine Registrierungsstelle 11 und eine Zertifizierungsstelle 12 implementiert. Die Zertifizierungsstelle 12 kann alternativ auch auf einem dedizierten Server (nicht dargestellt) implementiert sein.

Im Folgenden wird ein erfindungsgemäßes Verfahren erläutert: Ein Bediener ändert mittels des Engineering Station Clients 7 eine Automatisierungskonfiguration in einer computerimplementierten Konfigurationsumgebung 13 auf dem Engineering Station Server 2. Dabei kann die Automatisierungskonfiguration Informationen über ein Prozessabbild, Anlagenbilder, Distributionen zwischen verschiedenen Servern, Fremdsysteme zur Anbindung von sogenannten Package Units (z.B. via OPC UA) oder Navigationshierarchien enthalten. Insbesondere kann die Automatisierungskonfiguration Kommunikationsbeziehungen zwischen einzelnen Anlagenkomponenten aufweisen.

Ein auf dem Engineering Station Server 2 implementierter Kompilierungsdienst 14 übersetzt die geänderte Automatisierungskonfiguration in einen für den Operator Station Server 3 und das Automatisierungsgerät 10 verständlichen Code (Verbindungspfeil I) und überträgt die geänderte und übersetzte Automatisierungskonfiguration zu dem Operator Station Server 3 und dem Automatisierungsgerät 10 (Verbindungspfeile IIa und IIb). In dem Operator Station Server 3 wird die geänderte Automatisierungskonfiguration von einem computerimplementierten Konfigurationsdienst 15 empfangen und einem computerimplementierten Zertifikatsdienst 16 bereitgestellt (Verbindungspfeil III) .

Der Zertifikatsdienst 16 prüft daraufhin, ob sich aus der geänderten Automatisierungskonfiguration eine Notwendigkeit ergibt, ein bestehendes Zertifikat einer Anlagenkomponente zu revozieren oder zu erneuern, oder ein neues Zertifikat für eine Anlagenkomponente zu erstellen. Das Ergebnis dieser Prüfung wird einem Operator der Prozessanlage, ausgehend von einem Visualisierungsdienst 17 des Operator Station Servers 3, mittels des Operator Station Clients 5 grafisch dargestellt (Verbindungspfeil V). Es kann vorgesehen sein, dass der Operator selbst entscheiden kann, wie weiter vorgegangen werden soll. Es ist aber auch möglich, dass der Zertifikatsdienst 16 die im Folgenden beschriebenen Schritte automatisch (d.h. ohne eine Anweisung des Operators abzuwarten) durchführt.

Stellt der Zertifikatsdienst 16 fest, dass ein neues Zertifikat (insbesondere ein neues operatives Zertifikat) benötigt wird, kann er direkt die Registrierungsstelle 11 triggern, die sich um die Beantragung eines neuen Zertifikats kümmern soll. Hierzu kann sie einen entsprechenden Zertifikatsantrag an die Zertifizierungsstelle 12 richten. Es ist aber auch möglich, dass die Registrierungsstelle 11 die betreffende Anlagenkomponente triggert, selbst einen Zertifikatsantrag an die Zertifizierungsstelle 12 zu richten, den die Registrierungsstelle 11 dann an die Zertifizierungsstelle 12 weiterleitet.

Der Zertifikatsdienst 16 kann auch direkt, stellvertretend für die betreffende Anlagenkomponente, einen Zertifikatsantrag an die Zertifizierungsstelle 12 richten.

Hat der Zertifikatsdienst 16 ein neues Zertifikat erhalten, verteilt er dieses über eine spezielle Schnittstelle 18 an die betreffende(n) Anlagenkomponente(n) (Verbindungspfeil VI) .

Stellt der Zertifikatsdienst 16 fest, dass ein bereits bestehendes Zertifikat (insbesondere ein operatives Zertifikat) nicht mehr benötigt wird, kann er dieselben, zuvor erläuterten Schritte wie bei der Neubeantragung eines Zertifikats durchführen. Dasselbe gilt im Fall, dass ein bestehendes Zertifikat geändert werden muss.

Ein Engineering Station Server 2 ist nicht zwingend notwendig, um die Vorteile der beschriebenen Erfindung zu erhalten. Die geänderte Automatisierungskonfiguration kann auch im Rahmen eines sogenannten "Online Engineerings" direkt dem Konfigurationsdienst 15 zur Verfügung gestellt werden. Bei einem solchen "Online Engineering" werden zur Laufzeit der Prozessanlage Änderungen an der Automatisierungskonfiguration vorgenommen, ohne hierbei auf ein zentrales Engineering (auf dem Engineering Station Server 2) mit entsprechendem Übersetzten und Laden zurückzugreifen. Dies ist insbesondere für flexible und dynamische technische Anlagen wichtig, in denen beispielsweise durch Reorganisation von Package Units unterschiedliche Produkte hergestellt werden. Für neue Package Units, bzw. für nicht mehr verwendete Package Units ist ein Zertifikatsmanagement erforderlich. Die Reorganisation der Package Units kann hier durch einen Operator über den Operator Station Client 5 in einer entsprechenden Anwendung vorgenommen werden, wobei die Anwendung die Automatisierungskonfiguration anpasst und dem Konfigurationsdienst zur Verfügung stellt.

Unter einer "Package Unit" wird dabei ein modularer Anlagenteil verstanden, der in einem Engineering als eine abgeschlossene Einheit integriert werden kann. Package Units sind typischerweise umfangreicher als beispielsweise Messstellen oder technische Einrichtungen. Eine Package Unit kann sogar eine ganze Teilanlage mit einer kompletten verfahrenstechnischen Struktur darstellen, die mehrere technische Einrichtungen (z.B. Tanks) umfasst, die wiederum mehrere Messstellen (z.B. Ventile, Monitore, Regler, Motoren...) umfassen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen

## Patentansprüche

1. Leitsystem (1) für eine technische Anlage, insbesondere eine Fertigungs- oder Prozessanlage, welches wenigstens einen Operator Station Server (3) umfasst,
**dadurch gekennzeichnet, dass**
auf dem Operator Station Server (3) ein Zertifikatsdienst (16) implementiert ist, welcher dazu ausgebildet ist, Änderungen einer Automatisierungskonfiguration der technischen Anlage zur Laufzeit der technischen Anlage zu erfassen, und welcher dazu ausgebildet ist, mittels der erfassten Änderungen zu prüfen, ob innerhalb der technischen Anlage neue Zertifikate beantragt, bestehende Zertifikate geändert und/oder bestehende Zertifikate revoziert werden müssen.

2. Leitsystem (1) nach Anspruch 1, bei dem der Zertifikatsdienst (16) dazu ausgebildet ist, einem Bediener der technischen Anlage das Ergebnis der vorgenommenen Prüfung mittels einer Mitteilung mitzuteilen.

3. Leitsystem (1) nach Anspruch 1 oder 2, bei der Zertifikatsdienst (16) dazu ausgebildet ist, das Beantragen, Ändern und/oder Revozieren von Zertifikaten automatisiert in Reaktion auf die vorgenommene Prüfung zu initiieren.

4. Leitsystem (1) nach Anspruch 3, bei dem der Zertifikatsdienst (16) dazu ausgebildet ist, das Revozieren von Zertifikaten stellvertretend für die Anlagenkomponenten, deren Zertifikat revoziert werden soll, bei einer Zertifizierungsstelle (12) der technischen Anlage zu beantragen.

5. Leitsystem (1) nach einem der vorangegangenen Ansprüche, welches zusätzlich wenigstens einen Engineering Station Server (2) umfasst, welcher dazu ausgebildet und vorgesehen ist, eine geänderte Automatisierungskonfiguration der technischen Anlage zu erzeugen, und wobei der Operator Station Server (3) dazu ausgebildet ist, die geänderte Automatisierungskonfiguration der technischen Anlage von dem Engineering Station Server (2) zu empfangen und dem Zertifizierungsdienst (16) zur weiteren Verarbeitung bereitzustellen.

6. Verfahren zum Verwalten von Zertifikaten einer technischen Anlage mittels eines Leitsystems (1), welches wenigstens einen Operator Station Server (3) aufweist, das Verfahren umfassend:
a) Ändern einer Automatisierungskonfiguration der technischen Anlage;
b) Erfassen der geänderten Automatisierungskonfiguration der technischen Anlage zur Laufzeit der technischen Anlage durch einen auf dem Operator Station Server (3) implementierten Zertifikatsdienst (16);
c) Mittels der erfassten geänderten Automatisierungskonfiguration prüfen durch den Zertifikatsdienst (16), ob innerhalb der technischen Anlage neue Zertifikate beantragt, bestehende Zertifikate geändert und/oder bestehende Zertifikate revoziert werden müssen.

7. Verfahren nach Anspruch 6, bei dem einem Bediener der technischen Anlage das Ergebnis der vorgenommenen Prüfung mittels einer Mitteilung übermittelt wird.

8. Verfahren nach Anspruch 6 oder 7, bei dem der Zertifikatsdienst (16) das Beantragen, Ändern und/oder Revozieren von Zertifikaten automatisiert in Reaktion auf die vorgenommene Prüfung initiiert.

9. Verfahren nach Anspruch 8, bei dem der Zertifikatsdienst (16) das Revozieren von Zertifikaten stellvertretend für die Anlagenkomponenten, deren Zertifikat revoziert werden soll, bei einer Zertifizierungsstelle (12) der technischen Anlage beantragt.

10. Verfahren nach einem der Ansprüche 6 bis 9, bei dem das Leitsystem (1) zusätzlich wenigstens einen Engineering Station Server (2) umfasst, wobei die Änderung der Automatisierungskonfiguration der technischen Anlage durch den Engineering Station Server (2) vorgenommen wird, und wobei der Engineering Station Server (2) die geänderte Automatisierungskonfiguration der technischen Anlage an den Operator Station Server (3) überträgt, welcher die geänderte Automatisierungskonfiguration der technischen Anlage von dem Engineering Station Server (2) empfängt und dem Zertifizierungsdienst (16) zur weiteren Verarbeitung bereitstellt.

11. Verwendung eines Leitsystems (1) gemäß einem der Ansprüche 1 bis 5 zum Betrieb einer technischen Anlage, insbesondere einer Fertigungs- oder Prozessanlage.
